# EUROPEAN PATENT APPLICATION

(11) **EP 1 903 811 A1**
(43) Date of publication of application: **26.03.2008**
(21) Application number: 06780754.5
(22) Date of filing: 04.07.2006
(51) Int. Cl.: H04Q 7/22, H04L 12/56

(54) **CROSSOVER NODE DETECTING METHOD, CROSSOVER NODE DETECTING PROGRAM FOR EXECUTING THAT METHOD BY USE OF COMPUTER, AND MOBILE TERMINAL AND RELAY APPARATUS USED IN CROSSOVER NODE DETECTING METHOD**

(30) Priority: 08.07.2005 JP 2005200322
(71) Applicant: MATSUSHITA ELECTRIC INDUSTRIAL CO., LTD., Osaka 571-8501 (JP)
(72) Inventor: HIRANO, Jun, Matsushita Electric Industrial Co.,Ltd., 2-1-61, Shiromi,Chuo-ku, Osaka 540-6207 (JP); UE, Toyoki, Matsushita Electric Industrial Co.,Ltd., 2-1-61, Shiromi,Chuo-ku, Osaka 540-6207 (JP)
(74) Representative: Zimmer, Franz-Josef
(86) International application number: PCT/JP2006/313300
(87) International publication number: WO 2007/007590

(57) **Abstract**

The present invention provides a new technique on a crossover node detecting method and the like, by which a mobile terminal (mobile node) to perform a handover can quickly find out CRN so that the mobile terminal can quickly and continuously receive additional services, which the mobile node has been receiving before the handover, even after the handover. According to this technique, the crossover node detecting method comprises a step where a mobile node 10 compares an address suitable for a subnet constituted by an access router, to which another access point is connected, with an address suitable for a subnet constituted by an access router where an access point currently communicating is connected, and extracts a common address portion, a step where the mobile node transmits a message containing the extracted common address portion to a terminal 60 of its own communication destination, and a step where a relay apparatus with ability to decipher the message on a communication network of hierarchical structure positioned between said mobile node and said terminal at communication destination judges whether the relay apparatus itself is a crossover node or not according to the message.

## Description

### TECHNICAL FIELD

The present invention relates to a crossover node detecting method by a handover of a mobile terminal (mobile node; performing wireless communication, a crossover node detecting program for executing the above method by computer, and a mobile node and a relay apparatus used in the crossover node detecting method. In particular, the invention relates to a crossover node detecting method by a handover of a mobile node performing wireless communication by using mobile IPv6 (mobile Internet Protocol version 6), which is the next generation Internet protocol, a crossover node detecting program for executing this method by computer, and to a mobile node and a relay apparatus used in the crossover node detecting method.

### BACKGROUND ART

Currently, discussions are going on at the NSIS (Next Step in Signaling) Working Group of the IETF (Internet Engineering Task Force) on the standardization of a new protocol called NSIS (see the Non-Patent Document 1 given below). It is expected that NSIS is particularly effective for QoS (Quality of Service) guarantee in mobile environment, and there are references, which describe the requirements and the methods for realization of QoS guarantee and mobility support in NSIS (e.g. see the Non-Patent Documents 2 - 6 given below). Description will be given below on general outline of NSIS, which is a draft specification prepared by the NSIS Working Group of the IETF, and also on the method to establish QoS path (see the Non-Patent Documents 3 and 5 given below).

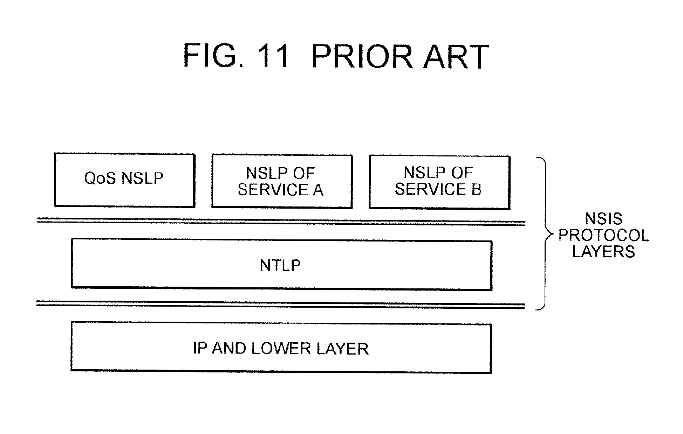

Fig. 11 shows protocol stacks of NSIS and its lower layer to explain an arrangement of the NSIS protocol in the prior art. The NSIS protocol layer is positioned immediately above IP and the lower layer. Further, the NSIS protocol layer comprises two layers: a NSLP (NSIS Signaling Layer Protocol) for generating a signaling message and processing to provide additional services, and a NTLP (NSIS Transport Layer Protocol) to carry out the routing of signaling message of NSLP. As NSLP, various types of NSLP are included such as NSLP for QoS (QoS NSLP), or NSLP (NSLP for Service A, and NSLP for Service B) for additional services (Service A and Service B).

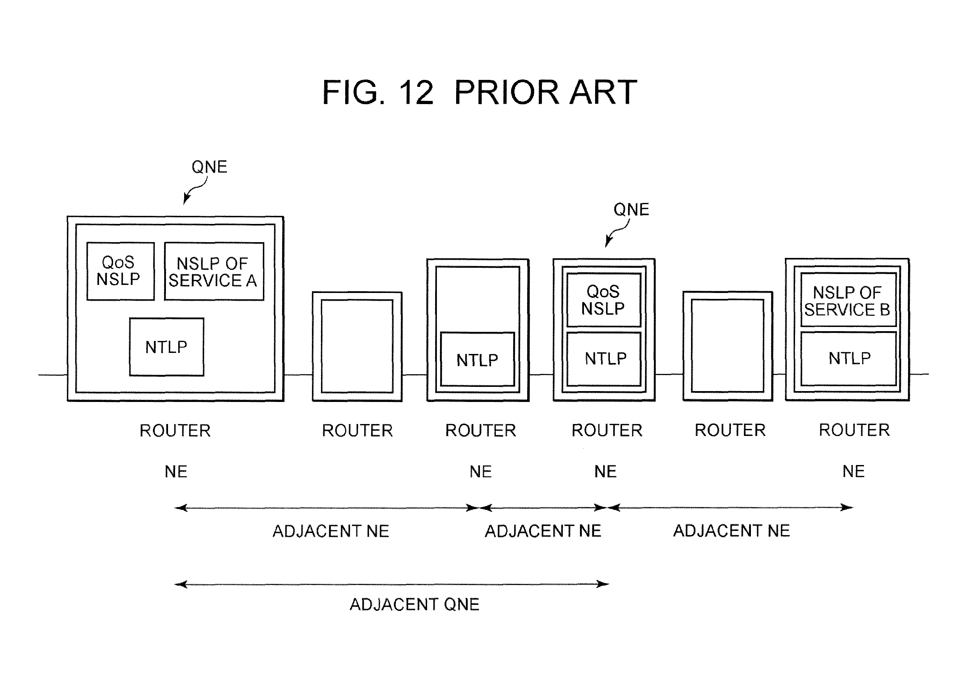

Fig. 12 is a schematical drawing to explain a concept of "adjacent" of NE and QNE, which are nodes of NSIS in the prior art. As shown in Fig. 12, at least NTLP is mounted on all nodes (NE: NSIS Entity), which have NSIS functions. On this NTLP, NSLP is not necessarily present, or one or more NSLPs may be present. Here, NE having NSLP for QoS is called QNE (QoS NSIS Entity). What can be qualified as an NE is a terminal or a router. Among the adjacent NEs, a plurality of routers, which are not NEs, may be present. Also, among the adjacent QNEs, a plurality of routers, which are not NEs, or a plurality of NEs not having QoS NSLP, may be present.

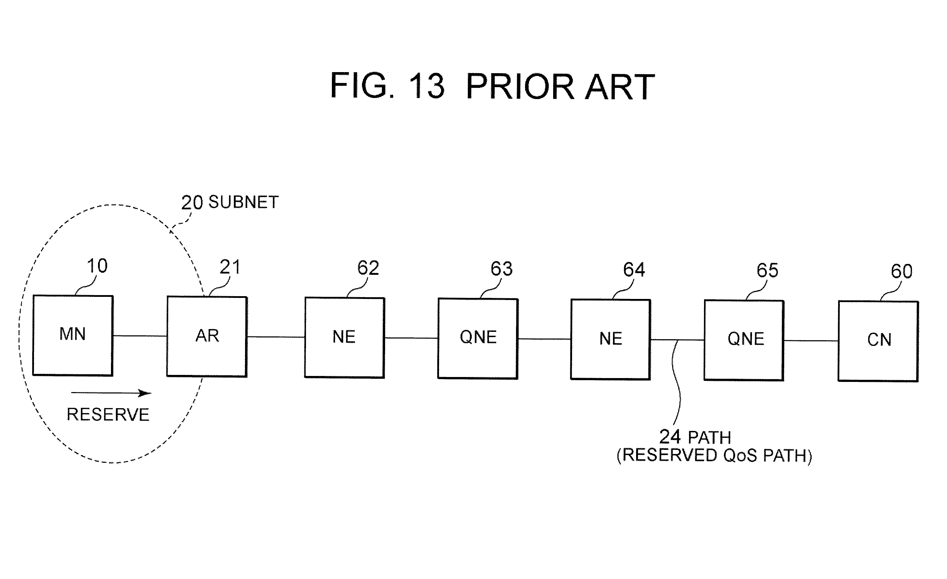

Next, referring to Fig. 13, description will be given on an example of a conventional method for establishing a QoS path. It is assumed that a MN (mobile node) 10, which is connected to an access router (AR) 21 in a subnet (also called "subnetwork") 20 is scheduled to receive or is actually receiving data from a correspondent node (CN) 60 of MN 10 for a certain purpose. When a QoS path is established, a RESERVE message for establishing the QoS path is transmitted to CN 60. The RESERVE message contains information of QoS (Qspec) as desired for receiving the data from CN 60. The transmitted RESERVE message reaches QNE 63 via AR 21 and NE 62 and other router not having other NSIS functions. NSLP of QNE 63 reserves QoS resource described in Qspec contained in the RESERVE message for this session. After passing through QNE 63, the RESERVE message reaches QNE 65 via NE 64 and other router not having NSIS functions. At QNE 65 also, the processing similar to the processing at QNE 63 is performed, and QoS resource is reserved. This operation is repeated, and when the RESERVE message is ultimately delivered to CN 60, the QoS path is established between MN 10 and CN 60.

To identify the resource reservation, a flow identifier and a session identifier are used. The flow identifier depends on care-of address (CoA) of MN 10 or IP address of CN 60. Each of QNE 63 and QNE 65 can have knowledge of whether or not resource reservation has been made to the data packet by confirming IP address of transmission source and destination of each data packet. When MN 10 moves to other subnet and CoA has been changed, the flow identifier is changed to match the change of CoA of MN 10. On the other hand, the session identifier is used to identify a series of data transmission for the session, and it is not changed due to the handover of the MN 10 as in the case of the flow identifier.

As a method to check the availability of QoS resource with respect to an arbitrary path, a method called QUERY is known. This method is in advance to check whether a desired Qspec can be reserved or not at each QNE when QoS path is established from MN 10 to CN 60. To check whether the desired Qspec can be reserved or not at each QNE, a QUERY message is transmitted. By a RESPONSE message, which is a reply to this QUERY message, the result can be received. The condition of the current resource reservation is never changed due to the QUERY and the RESPONSE messages. In order that QNE sends a notification to another QNE, a NOTIFY message can be used. This NOTIFY message is used, for instance, for notification of error. The RESERVE message, the QUERY message, the RESPONSE message, and the NOTIFY message as described above are the messages of NSLP for QoS guarantee and are described in the Non-Patent Document 3.

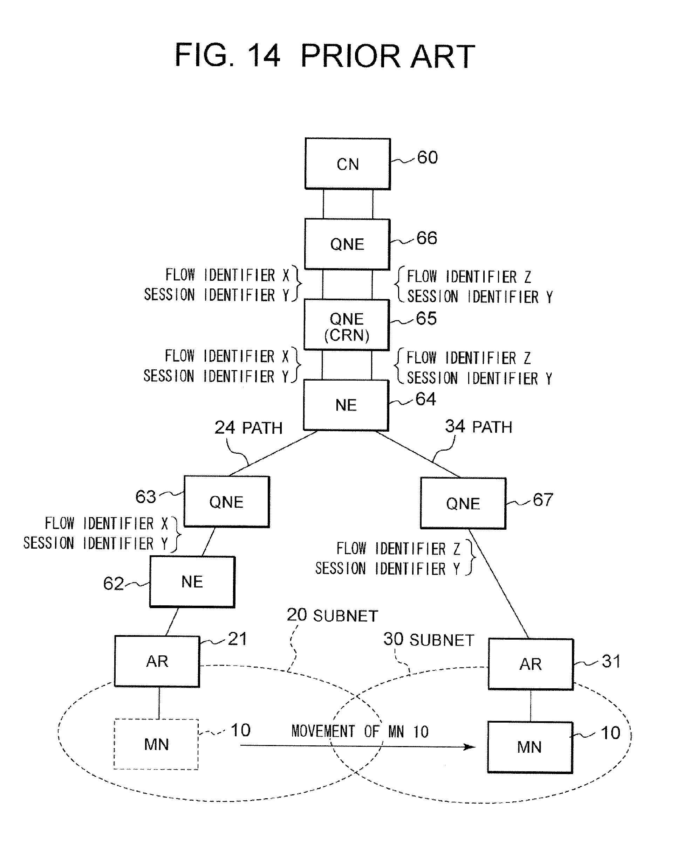

Next, referring to Fig. 14, description will be given on a method to avoid double resource reservation when MN 10 has handovered from a subnet 20 to a subnet 30 the prior art. When MN 10 is receiving the data from CN 60 and a QoS path (path 24) is established, QoS resources as desired by MN 10 are reserved at QNE 63, QNE 65 and QNE 66. Here, the flow identifier and the session identifier in this case are supposed to be X and Y respectively. In reality, a current IP address of MN 10 and a current IP address of CN 60 are included in the flow identifier X, and a sufficiently high and arbitrary numerical value is set to the session identifier Y. When MN 10 handovers to the subnet 30 under this condition, a RESERVE message is sent to CN 60 for establishing a new QoS path. The old path (path 24) is not liberated immediately after the handover of MN 10.

As described above, the flow identifier is changed due to the handover of MN 10. As a result, the flow identifier X on the path 24, and a flow identifier on the path 34 (the flow identifier on this path 34 is referred as "Z") are different from each other. Because there is no resource reservation to the session identifier Y on any of interfaces, QNE 67 judges that a new path has been established and performs resource reservation for the flow identifier Z and the session identifier Y. On the other hand, resource reservation to the session identifier Y already exists at QNE 65 and QNE 66. QNE 65 and QNE 66 compare the flow identifiers, and by confirming that the flow identifier has changed from X to Z, it is judged that a new path has been established to match the handover of MN 10. Then, means are taken such as updating of the old reservation without making reservation of new resource in order to avoid double resource reservation. The QNE where the old path and the new path begin to cross each other is called a crossover node (CRN). CRN may indicate a router where the routes actually begin to cross each other in some cases (such as NE 64 in Fig. 14). When discussion is made on QoS path, it means the QNE (QNE 65 in Fig. 14) in the old path (path 24) and in the new path (path 34) where, one of the adjacent QNEs (QNE 66 in Fig. 14) is the same but the others of the adjacent QNEs (QNE 63 and QNE 67 in Fig. 14) are different. Because CRN plays an important role, early discovery of CRN is an important problem in QoS handover.
[Non-Patent Document 1] NSIS WG
   (http://www.ietf.org/html.charters/nsis-charter.html)
[Non-Patent Document 2] H. Chaskar, Ed, "Requirements of a Quality of Service (QoS) Solution for Mobile IP", RFC3583, September 2003
[Non-Patent Document 3] Sven Van den Bosch, Georgios Karagiannis and Andrew McDonald "NSLP for Quality-of-Service signalling", draft-ietf-nsis-qos-nslp-04.txt, July 2004
[Non-Patent Document 4] S. Lee, et al., "Applicability Statement of NSIS Protocols in Mobile Environments", draft-manyfolks-signaling-protocol-01.txt, July 2004 [Non-Patent Document 5] R. Hancock et al, "Next Steps in Signaling: Framework", draft-ietf-nsis-fw-06.txt, July 2004
[Non-Patent Document 6] M. Brunner (Editor), "Requirements for Signaling Protocols", draft-ietf-nsis-req-09.txt, August 2003
[Non-Patent Document 7] Marco Liebsch, et al., "Candidate Access Router Discovery", draft-ietf-seamoby-card-protocol-08.txt, September 2004

As the methods to discover CRN in early stage, the following methods are known: First, MN transmits a request with a pair of old flow identifier and session identifier to a new access router (NAR), which fulfills the function as a proxy. Then, NAR transmits a QUERY message to CN in order to discover CRN of uplink. When the QUERY message is received, QNE on the path confirms the pair of old flow identifier and session identifier and checks whether QNE itself is CRN or not. When the QUERY message is received, CN transmits the QUERY message to NAR in order to discover CRN of downlink. By this method, however, at least one RTT (Round Trip Time) is required up to the discovery of CRN. In some cases, RTT is delayed very much.

### DISCLOSURE OF THE INVENTION

To overcome the above problems, it is an object of the present invention to provide a crossover node detecting method, by which it is possible to quickly detect CRN so that a mobile node performing handover can quickly and continuously receive additional services, which have been received before the handover, even after the handover, to provide a crossover node detecting program for executing the above method by computer, and also to provide a mobile node and a relay apparatus to be used in the crossover node detecting method.

To attain the above object, the present invention provides a crossover node detecting method in a communication system where a plurality of access routers each constituting a subnet are connected via a communication network of hierarchical structure, and at least one or more access points to form an inherent communicatable region are connected to each of said plurality of access routers, wherein a mobile node is designed to communicate with said access router where said access point is connected via wireless communication with said access point within said communicatable region, and said mobile node detects a crossover node where new and old communication paths cross each other and are branched off before and after the changing of connection on the communication network of said hierarchical structure when said mobile node handovers and the connection from the current communicating access point to another access point is changed over , wherein said method comprises a step where said mobile node compares an address suitable for a subnet constituted by an access router, to which said another access point is connected, with an address suitable for a subnet constituted by the access router where the access point currently communicating is connected, and extracts a common address portion; a step where said mobile node transmits a message including the extracted common address portion to a terminal of communication destination of its own; and a step where a relay apparatus able to decipher said message on the communication network of hierarchical structure positioned between said mobile node and said terminal of communication destination judges whether the apparatus itself is a crossover node or not according to said message. With the arrangement as described above, it is possible to quickly find out CRN so that the mobile node performing the handover can quickly and continuously receive additional services, which have been received before the handover, even after the handover.

Also, the present invention provides the crossover node detecting method as described above, wherein said method further comprises a step where said relay apparatus on said communication network of said hierarchical structure positioned between said mobile node and said terminal of communication destination judges whether the apparatus itself is the crossover node or not according to said message, and if it is judged that the apparatus itself is the crossover node, said apparatus transmits a message including information relating to the apparatus itself to said mobile node. With the arrangement as described above, the mobile node can have information of the crossover node and can include the information of the crossover node in a RESERVE message and can transmit it when resource reservation is made after handover a subnet.

Further, the present invention provides the crossover node detecting method as described above, wherein said method further comprises: a step where said relay apparatus transfers said message when said relay apparatus on said communication network of said hierarchical structure positioned between said mobile node and said terminal of communication destination judges whether the apparatus itself is the crossover node or not according to said message, and if it is judged that the apparatus itself is not the crossover node, said method further comprises a step where said relay apparatus transfers said message.
With the arrangement as described above, even when the relay apparatus is not a crossover node, the mobile node is possible to find out the crossover node at transfer destination.

Also, the present invention provides a crossover node detecting program for executing the crossover node detecting method according to claim 1 by computer. With the arrangement as described above, it is possible to quickly find out CKN so that the mobile node performing the handover can quickly and continuously receive additional services, which have been received before the handover, even after the handover.

Further, the present invention provides a mobile node used in a crossover node detecting method in a communication system where a plurality of access routers each constituting a subnet are connected via a communication network of hierarchical structure, and at least one or more access points to form an inherent communicatable region are connected to each of said plurality of access routers, wherein a mobile node is designed to communicate with said access router where said access point is connected via wireless communication with said access point within said communicatable region, and said mobile node detects a crossover node where new and old communication paths cross each other and are branched off before and after the changing of connection on the communication network of said hierarchical structure when said mobile node handovers and the connection from the current communicating access point to another access point is changed over, wherein said mobile terminal comprises: means for generating an address suitable for a subnet constituted by an access router where said another access point is connected; means for extracting common address portion by comparing said address generated by said generating means With an address suitable for a subnet constituted by an access router where an access point currently communicating is connected; and means for transmitting a message including said extracted common address portion to a terminal at its own communication destination. With the arrangement as described above, it is possible to quickly find out CRN so that the mobile node performing the handover can quickly and continuously receive additional services, which have been received before the handover, even after the handover.

Also, the present invention provides a relay apparatus on said communication network of hierarchical structure positioned between said mobile node and a terminal at communication destination, said mobile node to be used in a crossover node detecting method in a communication system where a plurality of access routers each constituting a subnet are connected via a communication network of hierarchical structure, and at least one or more access points to form an inherent communicatable region are connected to each of said plurality of access routers, wherein a mobile node is designed to communicate with said access router where said access point is connected via wireless communication with said access point within said communicatable region, and said mobile node detects a crossover node where new and old communication paths cross each other and are branched off before and after the changing of connection on the communication network of said hierarchical structure when said mobile node handovers and the connection from the current communicating access point to another access point is changed over, wherein said relay apparatus comprises: means for receiving a message including a common address portion, said common address portion which is extracted by said mobile node comparing an address suitable for a subnet constituted by an access router, to which said another access point is connected, with an address suitable for a subnet constituted by an access router where an access point currently communicating is connected; and means for judging whether the apparatus itself is a crossover node or not according to said message received by said receiving means. With the arrangement as described above, it is possible to quickly find out CRN so that the mobile node performing the handover can quickly and continuously receive additional services, which have been received before the handover, even after the handover.

Further, it is a preferred aspect of the present invention to provide the relay apparatus as described above, wherein, when the apparatus itself is judged as a crossover node by said judging means, said apparatus has transmitting means for transmitting a message including information on the apparatus itself to said mobile node. With the arrangement as described above, the mobile node can have information of the crossover node and can include the information of the crossover node in a RESERVE message and transmit it when resource reservation is made after handover a subnet.

Also, it is a preferred aspect of the present invention to provide the relay apparatus as described above, wherein, when it is judged that the apparatus itself is not a crossover node by said judging means, said apparatus has transfer means for transferring said message. With the arrangement as described above, even when the relay apparatus is not a crossover node, the mobile node is possible to find out the crossover node at transfer destination.

The crossover detecting method, the crossover node detecting program for executing the above method by computer, and a mobile node and a relay apparatus used in the crossover node detecting method are based on the arrangement as described above, and a mobile node performing the handover can quickly find CRN so that the additional services, which the mobile node has been receiving before the handover, can be quickly and continuously received after the handover.

### BRIEF DESCRIPTION OF THE DRAWINGS

Fig. 1 is a schematical drawing to show an arrangement of a communication system in an embodiment of the invention;
Fig. 2 is a block diagram to show an arrangement of a mobile node (MN) in the embodiment of the invention;
Fig. 3 is a table to show an example of AP-AR corresponding information to be stored in MN in the embodiment of the invention;
Fig. 4 is a block diagram to show an arrangement of AR in the embodiment of the invention;
Fig. 5 is a block diagram to show an arrangement of QNE in the embodiment of the invention;
Fig. 6 is a block diagram to show an arrangement of a router in the embodiment of the invention;
Fig. 7 is a block diagram to show an arrangement of CRN in the embodiment of the invention;
Fig. 8 is a first sequence chart to show an example of processing operation to discover CRN in the embodiment of the invention;
Fig. 9 is a second sequence chart to show an example of processing operation to discover CRN in the embodiment of the invention;
Fig. 10 is a third sequence chart to show an example of processing operation to discover CRN in the embodiment of the invention;
Fig. 11 is a schematical drawing to explain an arrangement of NSIS protocol according to the prior art;
Fig. 12 is a schematical drawing to explain a concept of "neighboring" that NE and QNE, which are nodes of NSIS, are located adjacent to each other in the prior art;
Fig. 13 is a schematical drawing to explain a method for establishing QoS route in the prior art; and
Fig. 14 is a schematical drawing to explain how double resource reservation is avoided in NSIS in the prior art.

### BEST MODE FOR CARRYING OUT THE INVENTION

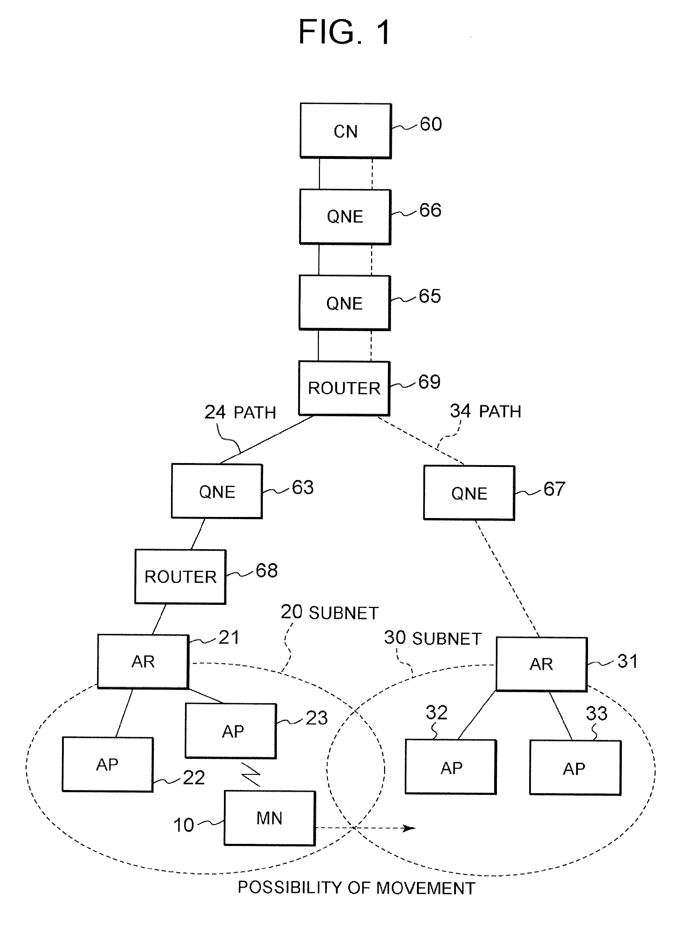

Detailed description will be given below on an embodiment of the present invention referring to Fig. 1 to Fig. 10. Fig. 1 is a schematical drawing to show an arrangement of a communication system in the embodiment of the invention. In Fig. 1, a QoS path (path 24) established between MN 10 and CN 60 is shown by solid line when MN 10 is connected to a subnet 20 before the handover. On the path 24, there are arranged AP 23, AR 21, router 68, QNE 63, router 69, QNE 65, and QNE 66 in this order from MN 10 to CN 60. A QoS path (path 34) established between MN 10 and CN 60 is shown by dotted line when MN 10 is connected to a subnet 30 after the handover. On the path 34, there are arranged AP 32, AR 31, QNE 67, router 69, QNE 65, and QNE 66 in this order from MN 10 to CN 60. Therefore, QNE (CRN) where an old path (path 24) begins to cross a new path (path 34) is QNE 65. In the embodiment of the invention shown in Fig. 1, a crossover router (CRR) where the old path (path 24) and the new path (path 34) cross each other is a router 69. There is also a case where CRN is identical with CRR. This is a case where the router 69 is a QNE.

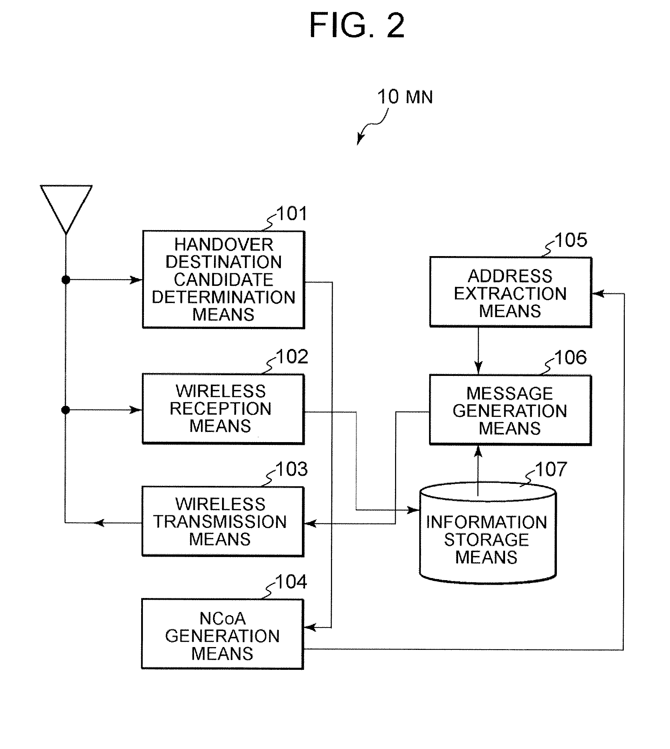

Next, description will be given on the function of MN 10. Fig. 2 is a block diagram to show an arrangement of MN in the embodiment of the invention. In Fig. 2, the functions of MN 10 are shown by blocks, and these functions can be fulfilled by hardware and/or software. MN 10 shown in Fig. 2 has handover destination candidate determination means 101, wireless reception means 102, wireless transmission means 103, NCoA generation means 104, address extraction means 105, message generation means 106, and information storage means 107.

The handover destination candidate determination means 101 is the means to receive a signal from a plurality of different APs and to search a list of APs, which are able to perform L2 handover, for instance. The wireless reception means 102 and the wireless transmission means 103 are the means for receiving and transmitting data by wireless communication respectively, and various functions necessary for performing wireless communication are included in these means.

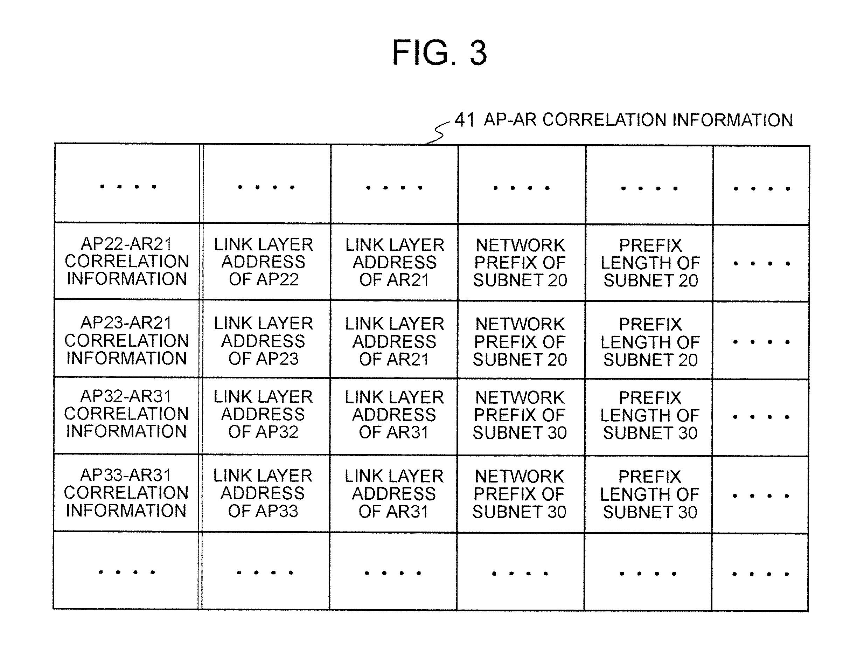

The NCoA generation means 104 is the means for generating NCoA (IP address) to be used at the destination of handover. The NCoA method is, for instance, a method, in which MN 10 has locally an AP-AR correlation information 41 as shown in Fig. 3 and retrieves the AP-AR correlation information according to the information on AP obtained by the handover destination candidate determination means 101 and to automatically generates NoA in stateless manner by obtaining information of AR at the destination where AP is connected (e.g. link layer address of AR, network prefix and prefix length , etc. of the subnet, to which AR belongs). Prefix information of the handover destination can also be obtained by using the protocol described in the Non-Patent Document 7.

In this case, however, NCoA is automatically generated in stateless manner, and it is necessary to have the means to confirm whether this NCoA can be actually used nor not in the subnet at the handover destination. For this reason, a processing is required so that AR with proxy function can check the validity of NCoA by selecting a subnet where AR itself can act as a proxy at the handover destination and by sending a message including NCoA to AR. As another method to acquire NCoA, there is a method, in which a currently communicating AR (i.e. AR belonging to the subnet 20 before the handover) receives a part of usable CoA in advance from DHCP (Dynamic Host Configuration Protocol) server of a neighboring subnetwork and one of CoAs received from the DHCP server of the subnet is allocated to MN 10 before MN 10 handovers to another AR (AR belonging to the subnet 30 after the handover). In this case, there is no need to check the validity of CoA because CoA is allocated in stateful manner.

The address extraction means 105 compares an IP address generated by the NCoA generation means 104 with an IP address suitable for the subnet 20 currently communicating, and extracts a portion of address commonly used. Because the communication network in the embodiment of the invention has hierarchical structure, by extracting the commonly used portion of the address, it is possible to acquire a part of the address of a router or QNE where the old path (path 24) and the new path (path 34) cross each other.

The message generation means 106 is the means for generating an NSIS signaling message (hereinafter, also referred as "message A") including the portion of address extracted by the address extraction means 105. It may be so designed that information of the flow of data or signaling in the direction from MN 10 to CR 60 (upper stream) may be included in addition to the information of the portion of address thus extracted. These types of information are stored in the information storage means 107. The message A generated by the message generation means 106 is transmitted to CN 60 along the path 24, which is the path of the current communication, by the wireless transmission means 103. In this case, it may be so arranged that message (also called "message B") to acquire information of QNE, which is adjacent to a router or a QNE not having the extracted address portion, may be transmitted together with the message A.

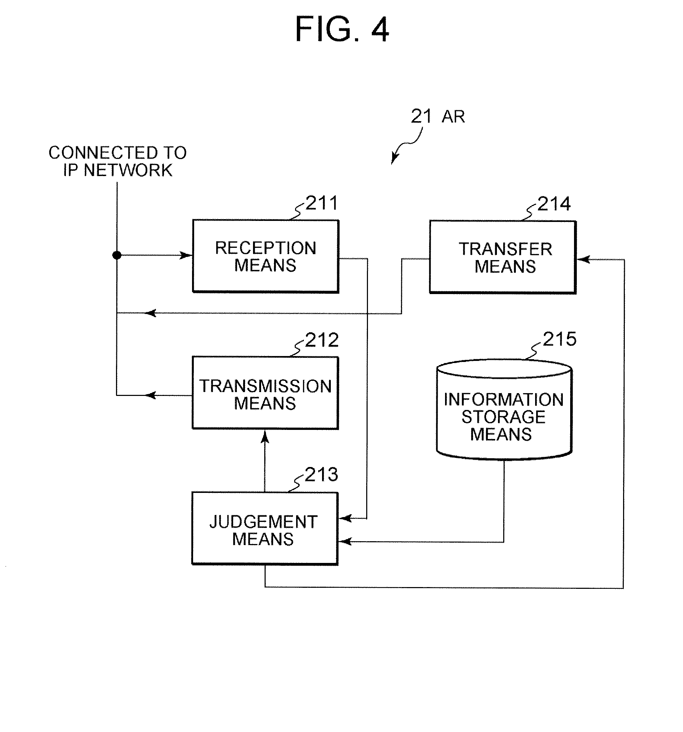

Next, description will be given on the function of AR 21, which receives the message A from MN 10. Fig. 4 is a block diagram to show an arrangement of AR 21 in the embodiment of the invention. Although the functions of AR 21 are shown by blocks in Fig. 4, these functions can be fulfilled by hardware and/or software. AR 21 as shown in Fig. 4 has reception means 211, transmission means 212, judgment means 213, transfer means 214, and information storage means 215.

The reception means 211 and the transmission means 212 are the means for receiving and transmitting the data. The judgment means 213 compares address information contained in the received message A with address information of AR 21 stored in the information storage means 215 and judges whether the address information contained in the message A is included in the address information of AR 21 or not. Concrete details of this judging will be described later. In case of AR 21 in the embodiment of the present invention, the address information contained in the message A is included in the address information of AR 21, and there may be QNE in upstream region where the path 24 and the path 34 cross each other. Accordingly, the transfer means 214 transfers the message A to an upstream router 69. The router 68 has the same arrangement and the same functions as those of the router 69 as described later, and detailed description is not given here.

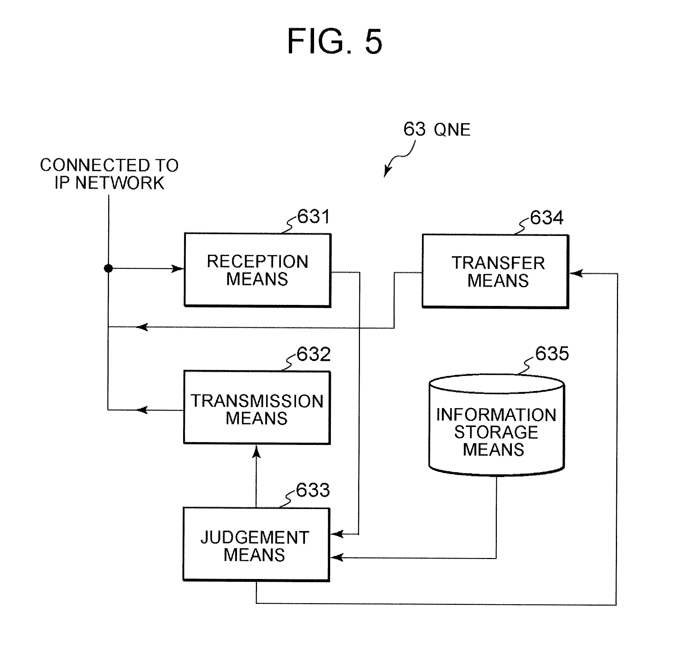

Next, description will be given on the functions of QNE 63, which receives the message A from MN 10 via the router 68. Fig. 5 is a block diagram to show an arrangement of QNE 63 in the embodiment of the present invention. In Fig. 5, the functions of QNE 63 are shown by blocks, while these functions can be fulfilled by hardware and/or software. QNE 63 as shown in Fig. 5 has reception means 631, transmission means 632, judgment means 633, transfer means 634, and information storage means 635.

The reception means 631 and the transmission means 632 are the means for receiving and transmitting data respectively. The judgment means 633 is the means to compare the address information contained in the received message A with the address information of QNE 63 stored in the information storage means 635 and to judge whether or not the address information contained in the message A is included in the address information of QNE 63. Concrete details of the judging will be described later. In case of QNE 63 in the embodiment of the present invention, the address information contained in the message A is included in the address information of QNE 63, and there may be QNE in upstream region where the path 24 and the path 34 cross each other. Accordingly, the transfer means 634 transfers the message A to the router 69 in upstream region.

Next, description will be given on the functions of the router 69, which receives the message A from QNE 63.

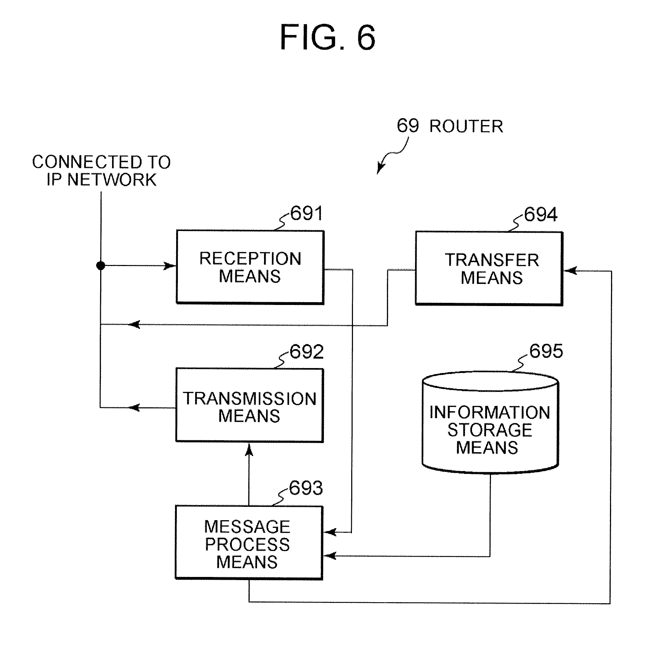

Fig. 6 is a block diagram to show an arrangement of the router 69 in the embodiment of the invention. In Fig. 6, the functions of the router 69 are shown by blocks, while these functions can be fulfilled by hardware and/or software. The router 69 shown in Fig. 6 has reception means 691, transmission means 692, message process means 693, transfer means 694, and information storage means 695.

The reception means 691 and the transmission means 692 are the means for receiving and transmitting data respectively. The message process means 693 is the means to decide how the received data or message should be processed. For instance, the router 69 does not have the function to decipher the message A, and the message process means 693 judges that the message A cannot be deciphered and delivers the message A to the transfer means 694. On the other hand, when information such as the data can be deciphered are received via the reception means 691, the message process means 693 performs adequate processing to the received data. The transfer means 694 delivers the message A delivered by the message processing means 693 to QNE 65 in upstream region.

Next, description will be given on the functions of QNE 65, which receives the message A from the router 69.

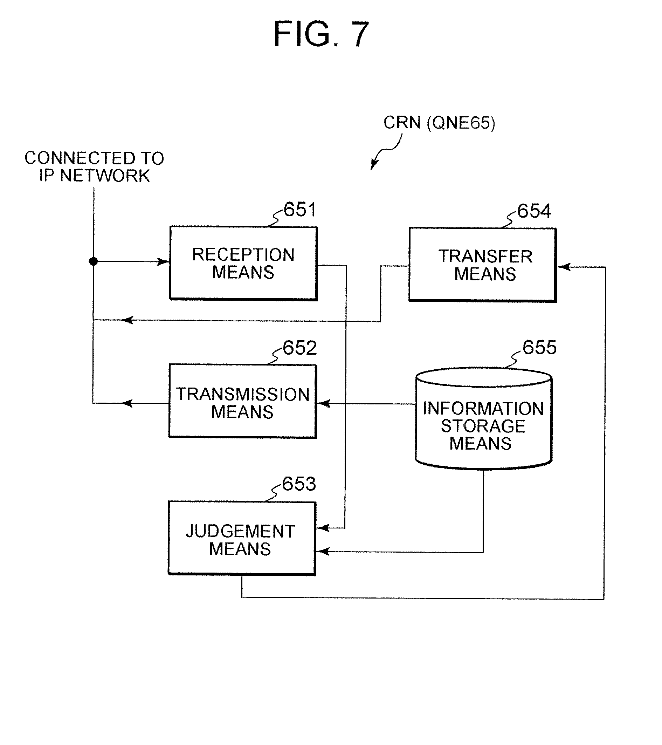

Fig. 7 is a block diagram to show an arrangement of QNE 65 in the embodiment of the invention. The arrangement of QNE 65 is the same as that of QNE 63 as described above, and detailed description is not given here. Only the points different in operation will be described. Upon receipt of the message A from the router 69 via the reception means 651, the judgment means 653 is the means to compare the address information contained in the message A with the address information of QNE 65 stored in the information storage means 655 and to judge whether the address information contained in the message A is included in the address information of QNE 65 or not. In this case, QNE 65 is CRN in the embodiment of the invention. An example of the processing to judge that QNE 65 is actually CRN is given below.

Here, discussion will be made on a case where the address information of AR 21 is "11110541", the address information of AR 31 is "11110841", the address information of QNE 63 is "11110441", the address information of QNE 65 is "11110234", the address information of QNE 66 is "11111345", and the address information of QNE 67 is "11110631". In this case, the address information contained in the message A is "11110". When the address information "11110541" of AR 21 is compared with the address information "11110" contained in the message A, the address information contained in the message A is included in the address information "11110541" of AR 21. Accordingly, it is judged at AR 21 that a branching point may exist in upstream region. Next, when the address information "11110441" of QNE 63 is compared with the address information "11110" contained in the message A, and it is found that the address information "11110" in the message A is included in the address information of QNE 63. Therefore, it is judged at QNE 63 that a branching point may exist still in upstream region.

Next, when the address information "11110234" of QNE 65 is compared with the address information "11110" contained in the message A, and it is found that the address information "11110" in the message A is included in the address information "11110234" of QNE 65. Therefore, it is judged at QNE 65 that a branching point may exist still in upstream region. Next, when the address information "11111345" of QNE 66 is compared with the address information "11110" contained in the message A, and it is found that the address information "11110" contained in the message A is not included in the address information "11111345" of QNE 66. Therefore, it is judged at QNE 66 that a branching point exists downstream of QNE 66. This means that QNE 65 is CRN.

In this case, the transmission means not shown in the figure of QNE 66 may transmit to QNE65 information that QNE 65 is CRN. And it may be so arranged that QNE 65 transmits a message including information relating to QNE 65 (e.g. information such as IP address of QNE 65) to MN 10. In case QNE 65 receives the message B as described above and if it already knows address information "11111345" of the neighboring QNE 66, QNE 65 can judge that it is itself the CRN without the need of transmitting the message A to QNE 66 because the address information "11110" included in message A is not included in the address information "11111345" of the neighboring QNE 66. It may be so arranged that the transmission means 652 of QNE 65 transmits a message (also called "message C") including information relating to QNE 65 (e.g. information such as IP address of QNE 65) to MN 10 to response message B.

When the information of CRN (QNE 65) has been known, MN 10 can transmit the information of CRN (QNE 65) by putting it in the RESERVE message when resource reservation is made after handover the subnet. When the relevant CRN (QNE 65) receives the RESERVE message including information of CRN (QNE 65), the relevant CRN (QNE 65) may perform the processing so that double reservation of the resource may not be made to CN 60 way ahead. For instance, the CRN (QNE 65) may perform the processing such as updating of old reservation without newly reserving the resource. If CRN (QNE 65) is specified in advance in this way, even when it is resource reservation after the handover of MN 10, it is not the resource reservation while searching for CRN (QNE 65) such as prior art, and it is possible to quickly generate QoS path.

It may be so designed that AR 31 at the destination of handover of MN 10 does not generate QoS path but CRN (QNE 65) generates it. In this case, CRN (QNE 65) must have information necessary for generating QoS path (e.g. NCoA of MN 10, for which the validity has been confirmed, or IP address of CN 60). When CRN (QNE 65) transmits the RESERVE message to both CN 60 and AR 31, the QoS path can be updated from CRN (QNE 65) to CN 60, and a QoS path can be newly generated between CRN (QNE 65) and AR 31.

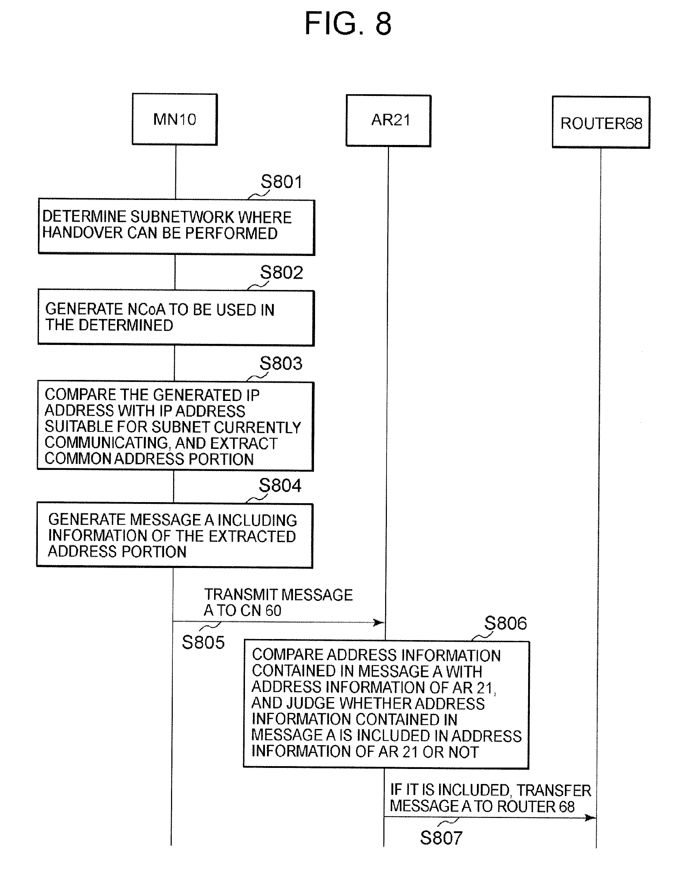

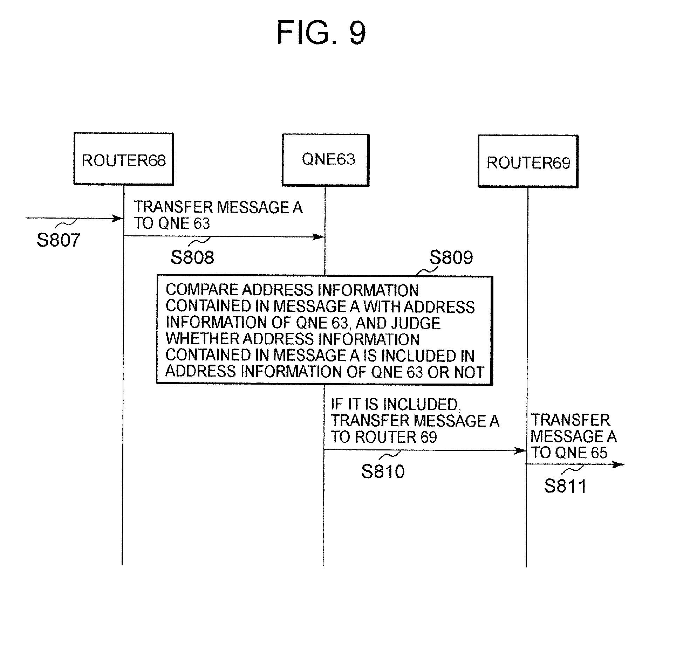

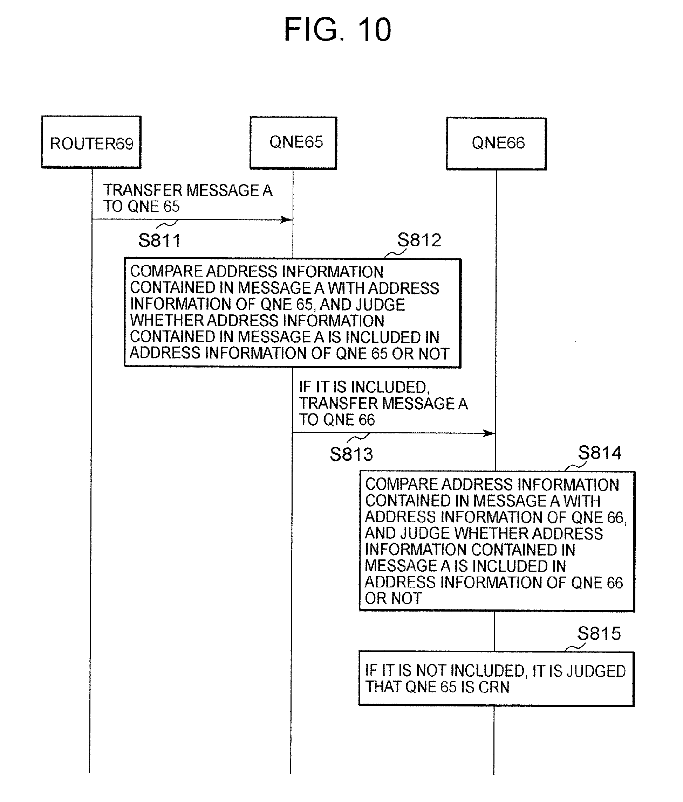

Next, referring to the sequence charts shown in Fig. 8 to Fig. 10, description will be given on the processing operation to discover CRN in the embodiment of the invention. The Step S807 of Fig. 8 and the Step S807 in Fig. 9 are the same step. Also, the Step S811 in Fig. 9 and the Step S811 in Fig. 10 are the same step. When L2 information is received from AP, which can be reached by a neighboring L2 signal, MN 10 determines a subnetwork to perform the handover based on the information (Step S801). Then, MN 10 generates NCoA (IP address) to be used in the subnetwork determined (Step S802). As the methods to generate NCoA, there are: a method to generate according to the AP-AR correlation information 41 as shown in Fig. 3, or a method to receive a part of the usable CoA from the DHCP server of the neighboring subnetwork and to allocate one of CoAs received from the DHCP server to MN 10.

Next, MN 10 compares the generated IP address with the IP address suitable for the subnet 20 currently communicating and extracts a common address portion (Step S803). Then, MN 10 generates the message A including the information of the extracted address portion (Step S804). In addition to the information of the extracted address portion, information of flow of data and signaling from MN 10 toward the direction of CN 60 (upper stream) may be included in the message A. In this case, the message B as described above may be transmitted together with the message A. Then, MN 10 transmits the generated message A to CN 60 via the path 24, which is the current communication path (Step S805).

When the message A transmitted from MN 10 has been received by AR 21, AR 21 compares the address information contained in the message A with the address information of AR 21 stored in the information storage means 215 and judges whether the address information contained in the message A is included or not in the address information of AR 21 (Step S806). In case of AR 21 in the embodiment of the present invention, the address information in the message A is included in the address of AR 21, and there may be QNE in upstream region where the path 24 and the path 34 cross each other. Thus, AR 21 transfers the message A to the router 68 in upstream region (Step S807).

When the message A has been received by the router 68 from AR 21, the router 68 transfers the message A to QNE 63 because it does not have the function to decipher the message A (Step S808). Upon receipt of the message A, QNE 63 compares the address information contained in the message A with the address information of QNE 63 stored in the information storage means 635 and judges whether the address information contained in the message A is included or not in the address information of QNE 68 (Step S809). In case of QNE 63 in the embodiment of the present invention, the address information in the message A is included in the address information of QNE 63, and also, there may be QNE in upstream region where the path 24 and the path 34 cross each other. Thus, QNE 63 transfers the message A to the router 69 in upstream region (Step S810).

When the message A has been received by the router 69 from QNE 63, the router 69 transfers the message A to QNE 65 because it does not have the function to decipher the message A like the router 68 (Step S811). Upon receipt of the message A, QNE 65 compares the address information contained in the message A with the address information of QNE 65 stored in the information storage means 655 and judges whether the address information contained in the message A is included or not in the address information of QNE 65 (Step S812). In case of QNE 65 in the embodiment of the present invention, the address information contained in the message A is included in the address information of QNE 65, and there may be QNE in upstream region where the path 24 and the path 34 cross each other. Accordingly, QNE 65 transfers the message A to QNE 66 in upstream region (Step S813).

When the message A has been received by QNE 66 from QNE 65, QNE 66 compares the address information in the message A with the address information of QNE 66 stored in the information storage means of itself not shown in the figure and judges whether the address information contained in the message A is included or not in the address information of QNE 66 (Step S814). In case of QNE 66 in the embodiment of the present invention, the address information contained in the message A is not included in the address information of QNE 66, and QNE 66 judges that QNE 65 in downstream region of QNE 66 is a CRN (Step S815). QNE 66 may transmit the information that QNE 65 is the CRN to QNE 65.

When QNE 65 judges that QNE 65 itself is CRN, a message including the information relating to QNE 65 (e.g. information such as IP address of QNE 65) to MN 10. By knowing the information of CRN (QNE 65), MN 10 can transmit the information of CRN (QNE 65) together with the RESERVE message when resource reservation is made after handover in the subnet. When the relevant CRN (QNE 65) receives the RESERVE message including the information of CRN (QNE 65), the relevant CRN (QNE 65) can perform the processing so that double reservation of the resource is not made to CN 60 way ahead. For instance, the relevant CRN (QNE 65) can perform the processing such as updating of old reservation instead of new resource reservation of the resource.

When QNE 65 receives the message B as given above and has knowledge of the address information of the adjacent QNE 66, it can judge that the address information contained in the message A is not included in the address information of the adjacent QNE 66. Accordingly, it can be judged the it is itself CRN without the need of transmitting the message A to QNE 66 in Step S813. QNE 65 may transmit a message C including the information relating to QNE 65 (e.g. information such as IP address of QNE 65) to MN 10 to give response to the received message B.

The expression of "transmission destination" as described in the present specification (e.g. the expression of "transmitting to CN 60") does not necessarily mean the transmission by specifying the address of CN 60 as transmission destination address of IP header. It means that a partner to ultimately receive the message is CN 60.

Each functional block used in the explanations of the embodiment of the present embodiment, described above, can be realized as a large scale integration (LSI) that is typically an integrated circuit. Each functional block can be individually formed into a single chip. Alternatively, some or all of the functional blocks can be included and formed into a single chip. Although referred to here as the LSI, depending on differences in integration, the integrated circuit can be referred to as the integrated circuit (IC), a system LSI, a super LSI, or an ultra LSI. The method of forming the integrated circuit is not limited to LSI and can be actualized by a dedicated circuit or a general-purpose processor. A field programmable gate array (FPGA) that can be programmed after LSI manufacturing or a reconfigurable processor of which connections and settings of the circuit cells within the LSI can be reconfigured can be used. Furthermore, if a technology for forming the integrated circuit that can replace LSI is introduced as a result of the advancement of semiconductor technology or a different derivative technology, the integration of the functional blocks can naturally be performed using the technology. For example, the application of biotechnology is a possibility.

### INDUSTRIAL APPLICABILITY

By the crossover node detecting method, the crossover node detecting program for executing this method by computer, and the mobile terminal (mobile node) and the relay apparatus used in the crossover node detecting method, CRN can be quickly found out so that the mobile node to perform the handover can quickly and continuously receive additional services, which have been received before the handover, after the handover. With regard to the crossover node detecting method by the handover of a mobile terminal (mobile node) performing wireless communication, the crossover node detecting program for executing the above method by computer, and the mobile node and the relay apparatus to be used in the crossover node detecting method, the present invention is useful - particularly in accomplishing the crossover node detecting method by the handover of the mobile node performing wireless communication using the mobile IPv6 protocol, which is the next generation Internet protocol, the crossover node detecting program for executing the method by computer, and the mobile node and the relay apparatus to be used in the method.

## Claims

1. A crossover node detecting method in a communication system where a plurality of access routers each constituting a subnet are connected via a communication network of hierarchical structure, and at least one or more access points to form an inherent communicatable region are connected to each of said plurality of access routers, wherein a mobile node is designed to communicate with said access router where said access point is connected via wireless communication with said access point within said communicatable region, and said mobile node detects a crossover node where new and old communication paths cross each other and are branched off before and after the changing of connection on the communication network of said hierarchical structure when said mobile node handovers and the connection from the current communicating access point to another access point is changed over, wherein said method comprises:
a step where said mobile node compares an address suitable for a subnet constituted by an access router, to which said another access point is connected, with an address suitable for a subnet constituted by the access router where the access point currently communicating is connected, and extracts a common address portion;
a step where said mobile node transmits a message including the extracted common address portion to a terminal of communication destination of its own; and
a step where a relay apparatus able to decipher said message on the communication network of hierarchical structure positioned between said mobile node and said terminal of communication destination judges whether the apparatus itself is a crossover node or not according to said message.

2. The crossover node detecting method according to claim 1, wherein said method further comprises a step where said relay apparatus on said communication network of said hierarchical structure positioned between said mobile node and said terminal of communication destination judges whether the apparatus itself is the crossover node or not according to said message, and if it is judged that the apparatus itself is the crossover node, said apparatus transmits a message including information relating to the apparatus itself to said mobile node.

3. The crossover node detecting method according to claim 1, wherein said method further comprises:
a step where said relay apparatus transfers said message when said relay apparatus on said communication network of said hierarchical structure positioned between said mobile node and said terminal of communication destination judges whether the apparatus itself is the crossover node or not according to said message, and if it is judged that the apparatus itself is not the crossover node, said method further comprises a step where said relay apparatus transfers said message.

4. A crossover node detecting program for executing the crossover node detecting method according to claim 1 by computer.

5. A mobile node used in a crossover node detecting method in a communication system where a plurality of access routers each constituting a subnet are connected via a communication network of hierarchical structure, and at least one or more access points to form an inherent communicatable region are connected to each of said plurality of access routers, wherein a mobile node is designed to communicate with said access router where said access point is connected via wireless communication with said access point within said communicatable region, and said mobile node detects a crossover node where new and old communication paths cross each other and are branched off before and after the changing of connection on the communication network of said hierarchical structure when said mobile node handovers and the connection from the current communicating access point to another access point is changed over wherein said mobile terminal comprises;
means for generating an address suitable for a subnet constituted by an access router where said another access point is connected;
means for extracting common address portion by comparing said address generated by said generating means with an address suitable for a subnet constituted by an access router where an access point currently communicating is connected; and
means for transmitting a message including said extracted common address portion to a terminal at its own communication destination.

6. A relay apparatus on said communication network of hierarchical structure positioned between said mobile node and a terminal at communication destination, said mobile node to be used in a crossover node detecting method in a communication system where a plurality of access routers each constituting a subnet are connected via a communication network of hierarchical structure, and at least one or more access points to form an inherent communicatable region are connected to each of said plurality of access routers, wherein a mobile node is designed to communicate with said access router where said access point is connected via wireless communication with said access point within said communicatable region, and said mobile node detects a crossover node where new and old communication paths cross each other and are branched off before and after the changing of connection on the communication network of said hierarchical structure when said mobile node handovers and the connection from the current communicating access point to another access point is changed over, wherein said relay apparatus comprises:
means for receiving a message including a common address portion, said common address portion which is extracted by said mobile node comparing an address suitable for a subnet constituted by an access router, to which said another access point is connected, with an address suitable for a subnet constituted by an access router where an access point currently communicating is connected; and
means for judging whether the apparatus itself is a crossover node or not according to said message received by said receiving means.

7. The replay apparatus according to claim 6, wherein, when it is judged that the apparatus itself is a crossover node by said judging means, said apparatus has transmitting means for transmitting a message including information on the apparatus itself to said mobile node.

8. The relay apparatus according to claim 6, wherein, when it is judged that the apparatus itself is not a crossover node by said judging means, said apparatus has transfer means for transferring said message.
